# DEMANDE DE BREVET EUROPEEN

(11) **EP 2 410 749 A1**
(43) Date de publication de la demande: **25.01.2012**
(21) Numéro de dépôt: 11174149.2
(22) Date de dépôt: 15.07.2011
(51) Int. Cl.: H04N 7/26, H04N 7/46, H04N 7/50

(54) **Procédé d'encodage adaptatif d'un flux vidéo numérique, notamment pour diffusion sur ligne xDSL**

(30) Priorité: 20.07.2010 FR 1055907
(71) Demandeur: FREEBOX, 75008 Paris (FR)
(72) Inventeur: Massiot, Christophe, 75014 Paris (FR)
(74) Mandataire: Dupuis-Latour, Dominique

(57) **Abrégé**

Le procédé comprend : a) la réception et la mémorisation (10, 12) d'une séquence comprenant une image courante et des images suivantes, toutes numérisées avec une même définition initiale ; et b) la détection (16) de la survenue éventuelle d'un changement de scène entre l'image courante et les images suivantes. En cas de changement de scène, il est en outre prévu : c) le calcul (24) d'une métrique de quantification pour les images suivantes ; d) la comparaison (26) de cette métrique de quantification à une valeur limite maximale prédéterminée ; e) si la métrique calculée est supérieure à la valeur limite, la réduction itérative (28) de la définition des images suivantes jusqu'à ce que la métrique devienne inférieure à la valeur limite ; f) l'encodage (32) des images suivantes avec la définition réduite déterminée à l'étape e1) ; et g) la diffusion du flux vidéo avec une séquence des images suivantes encodées à la définition réduite à l'étape f).

## Description

L'invention concerne la diffusion des flux vidéo numériques.

Elle concerne plus particulièrement la diffusion de flux vidéo par des canaux de transmission n'offrant qu'un débit de données (ou "bande passante") relativement faible, comme dans le cas des transmissions par IP (*Internet Protocol*), notamment des transmissions effectuées sur une paire téléphonique torsadée courante, préexistante, via un fournisseur d'accès internet par une technologie de type xDSL (*Digital Subscriber Line,* ligne numérique d'abonné), principalement ADSL (*Asymmetric DSL*).

En l'absence de toute compression, la transmission de flux vidéo selon les standards courants de télévision requiert des bandes passantes de l'ordre de 270 Mbps (mégabits par seconde) en définition standard (SD) et 1500 Mbps en haute définition (HD), valeurs tout à fait incompatibles avec les canaux de diffusion couramment utilisés tels que satellite, câble, diffusion hertzienne numérique.

Il en est a *fortiori* de même pour une diffusion par xDSL, technologie dont la bande passante est limitée à quelques mégabits par seconde, au plus une vingtaine de mégabits par seconde : typiquement, dans une transmission de type xDSL, la bande passante allouée pour la diffusion de la télévision est une allocation fixe de 3,5 Mbps par chaîne diffusée par ce canal.

Le flux vidéo à diffuser fait donc l'objet au préalable d'une compression par un encodeur, au moyen de procédés tels que ceux prescrits en particulier par les normes ISO/IEC 13818-2 (MPEG-2) - ci-après simplement "MPEG-2" - ou ISO/IEC 14496 (MPEG-4), notamment ISO/IEC 14496-10 (MPEG-4/H.264 AVC) - ci-après simplement "H.264".

Le but de cette compression, qui implique une perte intrinsèque d'information, est de contraindre le signal dans une bande passante donnée, qui peut être variable et éventuellement mutualisée avec d'autres programmes. Cette bande passante sera généralement de l'ordre de 1,5 à 15 Mbps en SD et 4 à 80 Mbps en HD.

Dans le cas d'une diffusion directe vers les téléspectateurs, la bande passante est souvent soit très coûteuse car rare (cas du satellite), soit fortement contrainte par la technique de transmission (cas du xDSL). En particulier, en xDSL, la bande passante disponible dépend de l'atténuation sur la paire de cuivre téléphonique, elle-même fonction, entre autres, de la longueur de la paire de fils de cuivre (éloignement entre l'abonné et l'autocommutateur central), du nombre de points de coupure et de la qualité de la liaison, en particulier du diamètre des fils. Pour assurer l'éligibilité à un maximum de clients, il est donc nécessaire d'imposer des contraintes fortes sur la bande passante utilisée par les programmes de télévision. Une technique courante consiste, au lieu d'encoder l'ensemble des pixels du signal, à commencer l'étape d'encodage par une réduction du nombre d'échantillons à représenter. Cette réduction s'appliquera horizontalement sur le nombre de colonnes de chaque image, et l'on trouve ainsi fréquemment, notamment sur les diffusions par satellite, des signaux SD comportant 544 ou 480 colonnes (au lieu de 720) pour 576 lignes, et des signaux HD comportant 1440 ou 1280 colonnes (au lieu de 1920) pour 1080 lignes.

Après compression, les données vidéo, audio et système encodées sont transportées et multiplexées sous forme de paquets de données. Chaque paquet porte en tant que données utiles une fraction de différents flux audio et vidéo dénommés PES (*Packetized Elementary Stream,* flux élémentaire en paquets) en MPEG2 ou NAL (*Network Abstraction Layer,* couche d'abstraction réseau) en H.264, ainsi que des paquets d'informations-système. Les flux PES ou NAL sont eux-mêmes composés de paquets de taille variable, comportant en en-tête des données de synchronisation et en données utiles des fractions de flux élémentaires encodés MPEG2 ou H.264.

La définition d'image de chaque séquence, c'est-à-dire le nombre de colonnes et de lignes de chaque image, est indiquée dans le flux de transport dans des structures répétées à chaque point d'accès aléatoire. Ces structures sont dénommées SH (*Sequence Header,* en-tête de séquence) en MPEG2, ou SPS (*Sequence Parameter Set,* jeu de paramètres de séquence) en H.264.

Dans le cas d'une transmission par satellite, par câble ou par voie hertzienne numérique terrestre, on utilise généralement une technique de multiplexage, c'est-à-dire qu'une même fréquence de transmission dispose d'une bande passante importante (de l'ordre de 30 à 40 Mbps) qui est partagée entre plusieurs chaînes (au nombre de six à quinze, pour des chaînes en SD).

Chaque chaîne est de préférence encodée avec un débit variable, adaptatif, de manière à répartir dynamiquement la bande passante entre les chaînes selon leurs besoins instantanés. En effet, une compression effectuée avec une force de quantification plus ou moins importante influe sur le débit alloué au programme.

Mais d'autre part, certaines séquences sont plus difficiles à encoder efficacement que d'autres : ainsi, un présentateur sur un fond fixe contient une forte redondance spatiale et temporelle et nécessitera peu de bande passante, tandis qu'un panoramique sur les tribunes d'un match de football contiendra une très grande quantité de mouvements et d'éléments indépendants qui nécessiteront une forte bande passante pour être transmis convenablement. Toutefois, statistiquement, il est assez peu probable que toutes les chaînes d'un même multiplex présentent à un instant donné une forte complexité nécessitant beaucoup de bande passante. Le multiplexeur allouera donc davantage de bande passante aux chaînes qui en ont le plus besoin, selon un algorithme de priorité de type "multiplexage statistique".

Dans le cas d'une transmission xDSL, le problème est tout à fait différent, car dans la mesure où la paire de fils de cuivre n'est généralement capable de transmettre qu'un seul programme de télévision indépendamment, le débit alloué à la transmission d'une chaîne est un débit constant et relativement faible (typiquement, une allocation de 3,5 Mbps par chaîne). Il n'y a pas de multiplexage, donc pas d'effet statistique à attendre.

En général, toutes les chaînes susceptibles d'être diffusées par ce canal sont encodées identiquement, à la même définition choisie de manière à réduire les défauts d'encodage des séquences les plus difficiles.

Cette définition uniforme d'encodage est choisie *a priori* par l'opérateur xDSL en fonction d'un compromis pour ne pas trop détériorer la qualité des séquences simples, tout en réduisant les artefacts de compression des séquences difficiles.

La contrepartie en est que les scènes statiques, plus faciles à encoder, seront toujours sous-échantillonnées, ce qui peut être perçu à l'image par le téléspectateur comme un défaut de qualité (léger flou).

Le WO 2010/078759 A1 explicite la manière de calculer *a priori* une définition d'image optimale, par calcul d'une métrique de quantification pour chaque image et décision prise image par image de modifier ou non la définition de l'image. Cette technique convient à des codecs tels que JPEG2000 ou MJPEG, où toutes les images sont codées indépendamment les unes des autres (application de type visiophonie). En revanche, elle est difficilement applicable à des codecs classiques de télévision numérique tels que ISO/IEC 13818-2(MPEG-2) ou 14496-10(H.264) : ces codecs sont en effet basés sur la diffusion de séquences d'images mettant en oeuvre une prédiction (images de type "P" ou "B", calculées à partir d'une image de type "1" et d'images subséquentes), donc à partir d'une pluralité d'images nécessairement de même définition (autrement, il ne serait pas possible de prédire une image donnée).

Le US 2004/01 61 158 A1 décrit une technique présentant des limitations comparables, où la définition est fixée *a priori* en fonction des propriétés intrinsèques de l'image et n'est pas fonction d'un critère de qualité de rendu pour une bande passante donnée.

Le but de l'invention est de pallier ces inconvénients, en proposant une solution permettant d'échapper à ce dilemme entre qualité d'image et contraintes de bande passante qui conditionne, aujourd'hui, la réduction de la définition des chaînes à diffuser sur des canaux à faible débit tels que les canaux de diffusion xDSL.

Essentiellement, l'invention propose de ménager ces deux aspects en réduisant dynamiquement la définition d'image d'un même programme à diffuser, en fonction des besoins instantanés d'une séquence.

Pour cela, l'invention s'appuie sur une analyse *a priori* de la complexité de la séquence à venir.

Le point de départ de l'invention réside dans la constatation de ce que la plupart des encodeurs du marché opèrent déjà une analyse antérieure des images à venir (typiquement sur 5 à 40 images) selon une technique d'anticipation dite de *look-ahead* consistant à "regarder devant soi". Cette analyse est opérée, dans les encodeurs actuels, soit pour moduler à débit constant la force de quantification pour obtenir une qualité homogène entre images consécutives, soit pour communiquer au multiplexeur les besoins futurs en bande passante, en multiplexage statistique.

Cette technique de *look-ahead* est par exemple décrite, dans un autre contexte, par le US 2004/01 148 17 A1.

En outre, la plupart des encodeurs actuellement disponibles procèdent lors de cette phase à une détection de changement de plan (également dénommé "changement de scène"), notamment pour décider l'insertion d'une image de référence avec compression et codage complets de l'image (codage I, *Intra*). En effet, lors d'un changement de scène, la nouvelle image ne peut plus être calculée en fonction des images qui la précèdent dans le flux, et il est donc inutile de coder cette image sur un mode prédictif (codage P, *Prédictif*).

La présente invention prévoit, essentiellement, de s'appuyer sur les algorithmes de *look-ahead* et de détection de changement de scène déjà connus pour, à chaque changement de scène détecté, estimer la complexité de la séquence suivante à l'aide des images contenues dans la mémoire tampon du *look-ahead.* Un algorithme évalue alors pour chaque définition d'image permise le niveau de quantification moyen des images du *look-ahead,* et l'encodeur décidera ensuite d'ajuster la définition à une valeur optimale (c'est-à-dire la définition la plus large permettant de rester en-deçà d'un seuil de quantification prédéfini) jusqu'au prochain changement de scène.

Plus précisément, l'invention a pour objet un procédé comprenant les étapes connues, par exemple d'après le WO 2010/078759 A1 précité, indiquées dans le préambule de la revendication 1. Les éléments propres à l'invention sont énoncés dans la partie caractérisante de cette revendication 1, et les sous-revendications visent diverses caractéristiques subsidiaires avantageuses.

On va maintenant décrire un exemple de mise en oeuvre de l'invention, en référence à la figure unique annexée, qui est un organigramme schématisant les principales étapes mises en oeuvre par le procédé de l'invention.

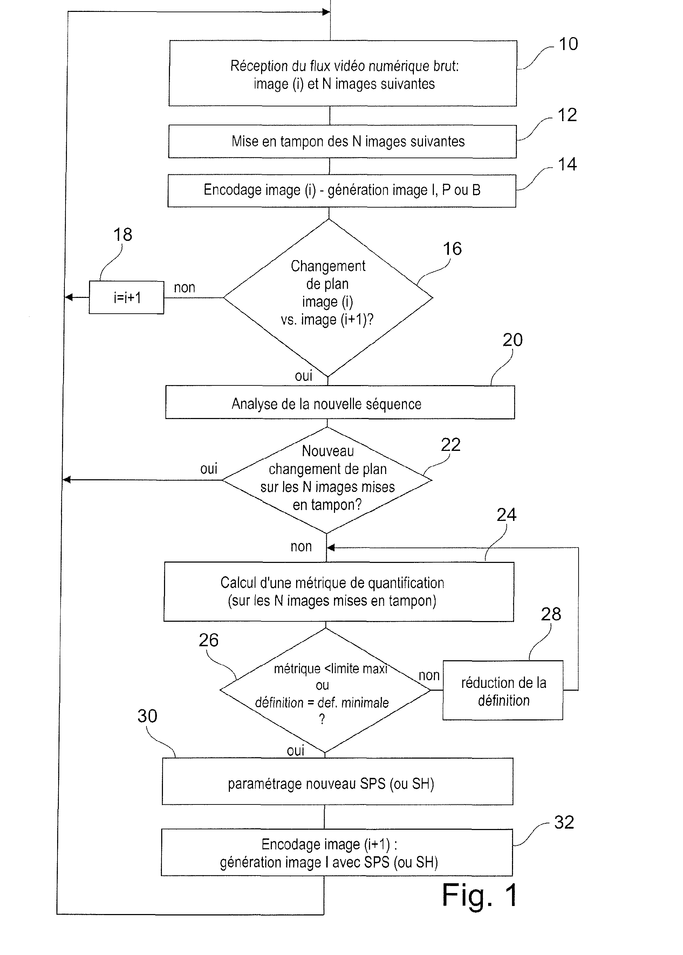

Sur la figure 1, le bloc 10 correspond à la réception du flux vidéo numérique brut, en définition maximale - par exemple 720 colonnes x 576 lignes en SD ou 1920 colonnes x 1080 lignes en HD, pour l'image i, c'est-à-dire l'image courante, et les *N* images suivantes.

Les *N* images suivantes sont mémorisées dans un tampon *look-ahead* (bloc 12). Le nombre d'images suivantes ainsi mises en mémoire est compris entre N = 5 et 40 images, typiquement *N* = 5 ou 10 images. L'étapes suivante (bloc 14) consiste à opérer le codage de l'image courante, par génération d'une image I, P ou B selon les techniques habituelles :
- le codage I (*Intra*), qui assure une compression et un codage complet de l'image, consiste essentiellement à découper l'image numérisée en blocs de taille fixe (par exemple 8 x 8 pixels), puis à encoder chacun des blocs par une DCT (*Discrete Cosine Transform,* transformée en cosinus discrète) ;
- le deuxième type de codage est le codage P (*Prédictif*), qui découpe de même l'image en zones appelées macroblocs, mais qui augmente l'efficacité de compression en comparant l'image codée à des images précédentes en prédisant le plus grand nombre possible de macroblocs par des références à des macroblocs similaires des images I ou P de référence, associés à des vecteurs de mouvement ;
- le troisième type de codage est le codage B (*Bidirectionnel*), qui augmente encore l'efficacité de compression en comparant l'image à coder aux images précédentes et suivantes.

L'étape suivante (bloc 16) consiste à détecter un éventuel changement de plan (changement de scène) suivant immédiatement l'image courante que l'on vient d'encoder. Le changement de scène correspond à une nouvelle image qui ne pourra plus être calculée en fonction des images qui la précèdent dans le flux.

II est en effet important qu'une modification éventuelle de la définition de l'image se fasse au moment d'un changement de scène, de manière à être visuellement imperceptible pour le téléspectateur. En outre, une modification de la définition au milieu d'une scène détruirait les références entre images et nuirait à l'efficacité de l'encodage.

Les algorithmes d'encodage existants contiennent des moyens de détection d'un changement de scène, notamment pour forcer l'encodage d'une image de type I pour l'image suivante.

Ces algorithmes s'appuient sur le calcul d'un score de similitude entre l'image courante *i* et l'image suivante *i*+*1*. Ce score peut notamment être calculé par évaluation d'une métrique de type SATD (*Sum of Absolute Transformed Differences,* somme des différences absolues des transformées), tout particulièrement par un tel algorithme appliqué à une représentation à résolution réduite de l'image courante et de l'image immédiatement consécutive : le fait de travailler sur une résolution réduite permet en effet de minimiser le temps de calcul du score de similitude, sans incidence notable sur la pertinence du score obtenu. Ce score peut être par ailleurs pondéré en fonction de la taille du GOP (*Group Of Pictures,* groupe d'images), c'est-à-dire la taille de la séquence d'images qui peut être décodée sans nécessiter d'informations externes au GOP lui-même. Le score de similitude obtenu, qui quantifie la probabilité plus ou moins grande de la survenue d'une changement de scène, est ensuite comparé à un seuil donné, de manière à décider de l'existence ou non d'un changement de scène à l'image suivante.

D'autres algorithmes de détection de changement de scène, également basés sur une analyse de corrélation entre images, sont également disponibles, par exemple dans la bibliothèque de fonctions de traitement d'images *FFmpeg.*

On notera que cette étape de détection de changement de scène ne nécessite pour la mise en oeuvre de l'invention aucun calcul supplémentaire, dans la mesure où il s'agit d'un traitement déjà effectué dans le cadre d'un encodage classique afin d'estimer notamment le coût d'encodage d'une image en image P par rapport à un encodage en image I.

Si aucun changement de scène n'est détecté au test 16, l'image suivante est considérée comme nouvelle image courante (bloc 18) et les étapes précédentes 10 à 14 sont itérées.

Si, en revanche un changement de scène est détecté au test 16, l'étape suivante (bloc 20) consiste à analyser la séquence des *N* images suivantes conservées dans le tampon de *look-ahead* pour évaluer l'opportunité d'une modification de la définition d'image.

Toutefois, cette analyse n'est opérée que si ces *N* images mises en tampon ne contiennent aucun changement de scène (test 22). En effet, un changement de définition pour quelques images seulement ne serait pas pertinent, et nuirait en outre à l'efficacité de l'encodage des images à venir.

L'analyse proprement dite (bloc 24) de la séquence des *N* images conservées dans le tampon *look-ahead* consiste à évaluer le niveau de quantification moyen de ces images, et à en déduire une valeur nommée "métrique de quantification" qui sera un paramètre utilisé ensuite, de façon caractéristique de l'invention pour décider dynamiquement de modifier ou non la définition de l'image.

La métrique de quantification peut être notamment le paramètre normatif dénommé QS (*Quantization Scale,* échelle de quantification) utilisé en compression MPEG2 ou H.264. Ce paramètre est représentatif du plus ou moins grand nombre de coefficients à encoder dans l'image, et il constitue de ce fait un bon indicateur de la complexité de l'image, du point de vue de l'efficacité de l'encodage.

Ce paramètre est obtenu en tant que résultat de la transformation DCT sur les différents macroblocs de l'image, et il est représenté en MPEG2 par une valeur numérique sur une échelle de 31 valeurs 2, 4, 6, ..., 62, ou sur une échelle plus étendue en H.264.

En variante, il est possible d'utiliser à cette même étape un facteur multiplicateur Lagrangien, également issu de la quantification des *N* images contenues dans le tampon de *look-ahead.* Le critère Lagrangien λ est également un bon indicateur de la complexité de l'image, mais sur une échelle beaucoup plus large que le paramètre QS. Le Lagrangien λ est notamment utilisé par les algorithmes de type *Rate-Distorsion Optimisation* (optimisation débit/distorsion) utilisés pour améliorer la qualité d'encodage lorsqu'il est nécessaire de faire des choix susceptibles d'affecter simultanément la qualité de l'image et le débit. Ces techniques sont notamment mises en oeuvre dans certaines étapes de calcul prescrites par la norme H.264.

L'étape suivante (test 26) consiste à comparer le niveau de quantification moyen des images calculé à l'étape précédente à une limite maximale imposée, par exemple selon un test de type "on ne dépasse pas un QS de 20" ou "on ne dépasse pas 2000 pour le Lagrangien λ".

Si cette condition n'est pas vérifiée, on opère alors une réduction de la définition courante des *N* images du tampon (bloc 28), si bien sûr cette définition n'est pas la définition minimale. Cette réduction de définition est exécutée par exemple par application d'un "filtre de *resize*" (redimensionnement) qui réduit la définition totale par diminution du nombre de pixels par ligne.

Avec la définition réduite, on réitère l'étape 24 de calcul de la nouvelle métrique de quantification, que l'on compare à nouveau (test 26) à la limite maximale précédemment fixée. Si la condition est respectée, alors on considère que l'on a atteint la définition "optimale", qui sera ainsi la plus large définition permettant de rester en-deçà du seuil de quantification prédéterminé. dans le cas contraire, les étapes 28, 24 et 26 sont itérées, tant que l'on a pas atteint la valeur minimale admissible de définition.

On peut ainsi, par exemple :
- en définition standard, réduire la définition de 720 x 576 pixels à :
   544 x 576, puis 480 x 576, jusqu'à 352 x 576 pixels ;
- en haute définition, réduire la définition de 1920 x 1080 pixels à :
   1440 x 1080, puis 1280 x 1080, jusqu'à 960 x 1080 pixels.

La réduction de la définition verticale (nombre de lignes) est théoriquement possible, quoique plus difficile, notamment dans le cas d'images entrelacées.

L'étape suivante (bloc 30) consiste, après encodage des images, à introduire dans le flux multimédia le nouveau paramétrage de la définition d'image, afin que ce paramètre puisse être reconnu et appliqué lors du décodage.

En MPEG2, le paramètre de définition est intégré au champ SH (*Sequence Header,* en-tête de séquence) du flux binaire et/ou dans le champ GOPH (*GOP Header,* en-tête de GOP).

En H.264, le paramètre de définition est contenu dans le champ SPS (*Sequence Parameter Set,* jeu de paramètres de séquence) du flux binaire, qui est un champ vers lequel chaque GOP renverra pour connaître les paramètres applicables à ce GOP, en particulier la définition d'image. L'image de rang *i*+*1* peut alors être encodée (bloc 32), cet encodage étant nécessairement de type I, compte tenu à la fois du changement de scène intervenu depuis l'image précédente et du changement éventuel des paramètres de définition d'image (paramètres contenus dans le champs SPS ou SH).

La mise en oeuvre de la présente invention présente de nombreux avantages, parmi lesquels on peut citer :
- l'obtention d'une qualité maximale d'image pour les séquences simples, sans sous-échantillonnage et donc sans flou d'image ;
- la réutilisation de paramètres déjà calculés par les algorithmes d'encodage standards (MPEG2 ou H.264), de sorte que le coût de la mise en oeuvre de l'invention est extrêmement minime en termes de ressources supplémentaires nécessaires ;
- une très grande flexibilité, dans la mesure où un changement fréquent de définition ne soulève aucune difficulté, dès lors que ce changement n'a pas lieu dans la même scène ;
- le caractère visuellement imperceptible du changement fréquent de définition, qui intervient au changement de scène ;
- le fait que le procédé soit mis en oeuvre du côté encodage, et soit donc transparent du côté décodage, en ne nécessitant aucune modification des algorithmes de décodage côté utilisateur ;
- la compatibilité assurée avec les techniques récentes de télévision en relief (3D), dans la mesure où les caractéristiques de l'image HD nécessaires à la transmission de l'information de relief ne sont pas altérées par la modification dynamique de la définition d'image opérée par le procédé de l'invention. On veillera toutefois, dans le cas où les formats *side-by-side* (*left*/*right*) [côte-à-côte (gauche/droite)] ou *top-bottom* [haut-bas] sont utilisés (c'est-à-dire avec transmission d'une image stéréoscopique au sein d'une même image informatique), à ne pas ré-échantillonner la composante utilisée pour la stéréoscopie (horizontale pour *side-by-side,* verticale pour *top-bottom*), sous peine d'introduire des erreurs d'alignement dans la stéréoscopie.

## Revendications

1. Un procédé d'encodage et de diffusion en temps réel d'un flux vidéo numérique, comprenant des étapes de :
a) réception et mémorisation (10, 12) d'une séquence d'images ayant été toutes numérisées avec une même définition d'image initiale ;
c) calcul (24) d'une métrique de quantification desdites images ;
d) comparaison (26) de ladite métrique de quantification à une valeur limite maximale prédéterminée ;
e) si la métrique calculée est supérieure à ladite valeur limite :
e1) réduction (28) de la définition d'image desdites images, et
e2) itération si besoin des étapes c) à e) jusqu'à ce que la métrique
devienne inférieure à ladite valeur limite ;
f) encodage (32) desdites images avec la définition réduite déterminée à l'étape e1) ; et
g) diffusion du flux vidéo avec une séquence des images encodées à définition réduite à l'étape f),
procédé **caractérisé en ce que**, ladite séquence comprenant une image courante et des images suivantes, il comprend en outre, après l'étape a), une étape de :
b) détection (16) de la survenue éventuelle d'un changement de scène
entre l'image courante et les images suivantes ;
et **en ce que** les étapes c) à g) sont ensuite exécutées conditionnellement, pour les images suivantes, en cas de changement de scène détecté à l'étape b).

2. Le procédé de la revendication 1, dans lequel l'étape g) comprend :
- la génération d'un nouvel en-tête de définition des paramètres d'image pour ladite séquence des images suivantes encodées à définition réduite à l'étape f) ; et
- l'insertion de ce nouvel en-tête dans le flux vidéo diffusé à l'étape g).

3. Le procédé de la revendication 1, dans lequel ladite diffusion du flux vidéo à l'étape g) est une diffusion par réseau, et dans lequel ladite valeur
limite de métrique de quantification est une valeur fonction de la bande passante disponible sur ledit réseau.

4. Le procédé de la revendication 3, dans lequel ladite diffusion par réseau est une diffusion sur ligne xDSL, ladite valeur limite de métrique de quantification étant fonction de la bande passante disponible sur ladite ligne xDSL.

5. Le procédé de la revendication 1, dans lequel la détection de la survenue d'un changement de scène à l'étape b) est opérée par :
b1) calcul d'un score de similitude entre l'image courante et lesdites
images suivantes, et
b2) comparaison dudit score de similitude à un seuil de décision prédéterminé.

6. Le procédé de la revendication 5, dans lequel ledit score de similitude est calculé par application d'un algorithme de type SATD, *Sum* of *Absolute Transformed Differences,* Somme des Différences Absolues des Transformées, sur une représentation à résolution réduite de l'image courante et de l'image immédiatement consécutive.

7. Le procédé de la revendication 1, dans lequel la métrique de quantification calculée à l'étape c) est une valeur moyennée du degré de quantification de chacune desdites images suivantes.

8. Le procédé de la revendication 7, dans lequel la métrique de quantification calculée à l'étape c) est fonction du paramètre normatif d'Échelle de Quantification QS, *Quantizer Scale,* issu d'une étape de quantification desdites images suivantes.

9. Le procédé de la revendication 7, dans lequel la métrique de quantification calculée à l'étape c) est fonction d'un facteur Lagrangien issu d'une étape de quantification desdites images suivantes.

10. Le procédé de la revendication 1, dans lequel la réduction de la définition d'image opérée à l'étape e1) est une réduction de la résolution horizontale de l'image.

11. Le procédé de la revendication 1, dans lequel :
- il est en outre prévu, préalablement à l'étape c), une étape de détection (22) de la survenue éventuelle d'un changement de scène dans la séquence desdites images suivantes, et
- l'exécution de l'étape c) est conditionnée à l'absence de changement de scène ainsi détectée dans la séquence des images suivantes.
